# EUROPÄISCHE PATENTSCHRIFT

(11) **EP 1 993 889 B1**
(45) Veröffentlichungstag und Bekanntmachung des Hinweises auf die Patenterteilung: **02.06.2010**
(21) Anmeldenummer: 07726566.8
(22) Anmeldetag: 01.03.2007
(51) Int. Cl.: B60T 8/26, B62L 3/08

(54) **KRAFTRADBREMSANLAGE**
MOTORCYCLE BRAKE SYSTEM
SYSTÈME DE FREINAGE DE MOTOCYCLETTE

(30) Priorität: 04.03.2006 DE 102006010046; 31.05.2006 DE 102006025327
(43) Veröffentlichungstag der Anmeldung: 26.11.2008
(73) Patentinhaber: Continental Teves AG & Co. oHG, 60488 Frankfurt (DE)
(72) Erfinder: HINZ, Axel, 61267 Neu-Anspach (DE); VOGEL, Günther, 63303 Dreieich (DE)
(86) Internationale Anmeldenummer: PCT/EP2007/051930
(87) Internationale Veröffentlichungsnummer: WO 2007/099139

(56) Entgegenhaltungen:
- EP-A- 1 277 635
- EP-A- 1 652 744
- EP-A2- 1 334 894
- WO-A-91/05686
- DE-A1- 10 209 984
- JP-A- 61 160 343
- JP-A- 2000 006 779
- JP-A- 2000 071 963

## Beschreibung

Die Erfindung betrifft eine Kraftradbremsanlage nach dem Oberbegriff des Patentanspruchs 1.

Aus der JP 2000071963 A ist bereits eine derartige Kraftradbremsanlage bekannt. Die Bremsanlage weist einen hydraulisch betätigbaren Vorderrad- und Hinterradbremskreis auf, in denen gemeinsam als auch unabhängig voneinander über einen fuß- und handbetätigten Hauptbremszylinder Bremsdruck in den Radbremsen aufgebaut werden kann. Zur Bremsschlupfregelung sind im Vorderrad- als auch im Hinterradbremskreis elektromagnetisch aktivierbare Ein- und Auslassventile sowie eine von einem Elektromotor antreibbare zweikreisige Pumpe eingesetzt. Ferner sind über die Ein- und Auslassventile und die Pumpe hinaus, zusätzlich ein elektrisches Trenn- und ein Umschaltventil in jedem der beiden Bremskreisen vorhanden, um bei manueller Betätigung eines der beiden Hauptbremszylinders auch Bremsdruck in dem nicht manuell betätigten Bremskreis aufbauen zu können, wozu die Pumpe, das Trenn- und Umschaltventil elektrisch aktiviert wird.

Ein Nachteil dieser Bremsanlage ist das Zurückwirken der Pumpe auf den manuell betätigten Hauptbremszylinder, wodurch ein Pulsieren am Hand- oder Fußbremshebel beim Pumpenanlauf kurzzeitig spürbar ist.

Aus JP 61160343 A ist eine hydraulische Bremsanlage bekannt, die zwischen zwei Pumpen und einem Hauptbremszylinder jeweils eine Ventilschaltung zur Verhinderung der Druckrückwirkung der beiden Pumpen auf den Hauptbremszylinder aufweist, wozu die Ventilschaltung jeweils aus einem in Grundstellung geöffneten, elektromagnetisch sperrbaren 2/2-Wegeventil und einem in Parallelschaltung dazu angeordneten, in Richtung des Hauptbremszylinders sperrenden Rückschlagventil besteht.

Ferner ist aus WO91/05686 A eine hydraulische Bremsanlage bekannt, die zur Begrenzung der Pumpenförderleistung parallel zu jeder Pumpe ein im Grundstellung geschlossenes, elektromagnetisch in Offenstellung schaltbares 2/2-Wegeventil aufweist, wodurch in der Offenstellung des 2/2-Wegeventils der Pumpenförderstrom zurück zur Pumpensaugseite gelangt, die mit einem drucklosen Vorratsbehälter verbunden ist, welcher an einem Hauptbremszylinder angeschlossen ist.

Es ist daher die Aufgabe der vorliegenden Erfindung, eine Kraftradbremsanlage der angegebenen Art derart zu verbessern, dass mit möglichst einfachen und funktionssicheren Mitteln eine Rückwirkung der Pumpe auf den hand- oder fußbetätigten Hauptbremszylinder verhindert werden kann.

Diese Aufgabe wird für eine Kraftfahrzeugbremsanlage der angegebenen Art mit den kennzeichnenden Merkmalen des Patentanspruchs 1 gelöst.

Weitere Merkmale und Vorteile der Erfindung gehen aus den Unteransprüchen sowie aus der nachfolgenden Beschreibung eines Ausführungsbeispiels hervor.

Es zeigen:
- Figur 1: eine Hydraulikschaltung für eine Kraftradbremsanlage, die zusätzlich zur Ventilschaltung des zitierten Standes der Technik in jedem der beiden Bremskreise über ein außerhalb der Pumpe angeordnetes Pumpenumlaufventil und ein Pumpenabsperrventil verfügt, die elektrisch betätigbar sind,
- Figur 2: einen gegenüber Figur 1 vereinfachten Schaltungsaufbau, indem das Pumpenabsperrventil durch ein ausschließlich hydraulisch betätigbares Rückschlagventil ersetzt wurde,
- Figur 3: abweichend von Fig. 2 den Anschluss des Pumpenumlaufventils unmittelbar am Kompressionsraum der Pumpe, wobei das Pumpendruckventil die Funktion des aus Figur 2 bekannten Rückschlagventils übernimmt.

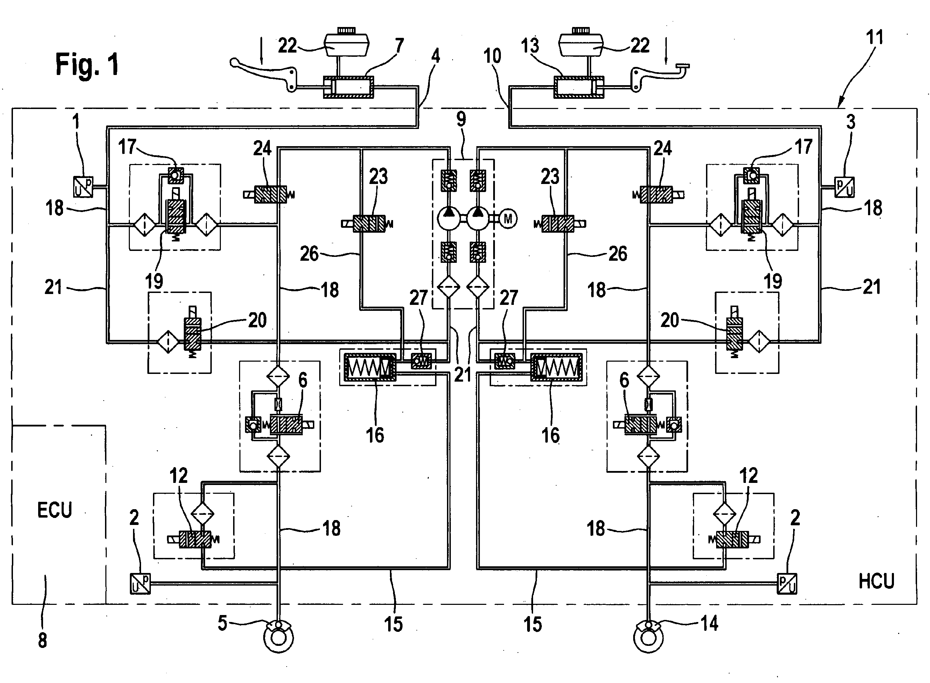

Die Figur 1 zeigt den Hydraulikschaltplan für eine Kraftradbremsanlage in schematischer Darstellung. Die Bremsanlage besteht aus einem hydraulisch betätigbaren Vorderrad- und Hinterradbremskreis 4, 10, mit jeweils einem am Vorderradbremskreis 4 angeschlossenen, durch Handkraft betätigbaren Hauptbremszylinder 7 und mit einem fußkraftproportional betätigbaren Hauptbremszylinder 13 am Hinterradbremskreis 10 zur Betätigung der Hinterradbremse 14.

Zur Bremsschlupfregelung sind im Vorderrad- als auch Hinterradbremskreis 4, 10 elektromagnetisch betätigbare Ein- und Auslassventile 6, 12 angeordnet, wobei jeweils das in Grundstellung geöffnete Einlassventil 6 in die Bremsleitung des Vorder- als auch des Hinterradbremskreises 4, 10 eingesetzt ist, welche den jeweils zugehörigen Hauptbremszylinder 7, 13 über ein Trennventil 19 mit der Vorderrad- oder der Hinterradbremse 5, 14 verbindet. Das in Grundstellung geschlossene Auslassventil 12 ist jeweils in eine Rücklaufleitung 15 eines jeden Bremskreises eingesetzt, welche die Vorder- öder Hinterradbremse 5, 14 mit jeweils einem Niederdruckspeicher 16 und dem Saugpfad 21 einer zweikreisig aufgeteilten Pumpe 9 verbindet, die nach dem Rückförderprinzip arbeitet. Die Pumpe 9 steht druckseitig mit den Bremsleitungen 18 beider Bremskreise in Verbindung, so dass in einer Bremsschlupfregelphase eine bedarfsgerechte Rückförderung des jeweils von der Vorder- bzw. Hinterradbremse 5, 14 abgelassenen Bremsflüssigkeitsvolumens in die Bremsleitungen 18 beider Bremskreise gewährleistet ist. Die Pumpkolben der beiden Pumpenkreise werden gemeinsam von einem Elektromotor 2 angetrieben, sodass ohne die nachfolgend noch näher zu erläuternde erfindungsgemäße Ventilschaltung bereits bei einer schlupffreien Abbremsung mit dem Anlauf der Pumpe die Pulsation des Pumpendrucks ungehindert entweder auf den handbetätigten Bremshebel oder das fußbetätigte Bremspedal zurückwirken würde

Beide Bremskreise 4, 10 sind entsprechend ihrem schaltungstechnischen Aufbau gemeinsam als auch unabhängig voneinander betätigbar, mit der Besonderheit, dass beispielsweise bei einer manuellen Betätigung des am Vorderradbremskreis 4 angeschlossenen Hauptbremszylinder 7 nicht nur ein Bremsdruckaufbau in der Vorderradbremse 5, sondern gleichzeitig auch ein elektrohydraulischer Bremsdruckaufbau in der Hinterradbremse 14 erfolgt, indem der Elektromotor 2 die Pumpe 9 in Betrieb setzt und infolge der im Hinterradbremskreis 10 elektrisch initiierten Umschaltstellung von Trenn- und Umschaltventil 19, 20 die Pumpe 9 Druckmittel vom Hauptbremszylinder 13 entnimmt und zur Hinterradbremse 14 fördert, während das Trennventil 19 die Pumpendruckseite vom Hauptbremszylinder 13 trennt. Durch die Zwangskoppelung beider Pumpenkreise wäre somit ohne die Merkmale der noch zu erläuternde Erfindung am Hauptbremszylinder 7 ein Pulsieren spürbar, was in einer schlupffreien Normalbremsung infolge der Schließstellung des Auslass- und Umschaltventils von kurzer Dauer ist.

Das vorgenannten Betätigungsbeispiel lässt sich natürlich auch umkehren, indem durch die Betätigung des mit der Hinterradbremse 10 verbundenen Hauptbremszylinders 13 nach gleichem Schema eine durch den Pumpenanlauf elektrohydraulisch initiierte Bremsung an der Vorderradbremse 5 ausgelöst wird, wobei ohne die Merkmale der Erfindung ein Pulsieren am Hauptbremszylinder 13 spürbar würde.

Daraus folgt, dass bei Betätigung eines der beiden Hauptbremszylinder 7, 13 der jeweils vom Fahrer nicht betätigte Bremskreis bereits zur schlupffreien Abbremsung elektrohydraulisch fremdansteuerbar durch die zweikreisige Pumpe 9 unter Druck gesetzt wird, sodass sowohl die Vorder- als auch Hinterradbremse aktiv zur Bremsverzögerung beitragen, falls nur einer der beiden Hauptbremszylinder 7, 13 betätigt wird.

Zur Erfassung des vom Hauptbremszylinder 7 in den Vorderradbremskreis 4 eingesteuerten Drucks wird in der Regel ein Drucksensor 1 verwendet. Auch die Überwachung des in den Hinterradbremskreis manuell eingesteuerten Drucks erfolgt mittels eines in der Nähe des Hauptbremszylinders 13 angeordneten Drucksensors 3. Zur sicheren Überwachung des Radbremsdrucks als auch gleichzeitig zur komfortbetonten Analogregelung der Einlassventile 6 sind beide Bremskreise 4, 10 zusätzlich mit zwei den Radbremsdruck erfassende Drucksensoren 2, 30 versehen.

Bei manueller Betätigung des Vorderradbremskreises 4 bildet der mittels des Drucksensors 1 im Vorderradbremskreis 4 erfasste Hauptbremszylinderdruck die Führungsgröße zur elektrischen Aktivierung der im Hinterradbremskreis 10 eingesetzten Pumpe 9, die im Zusammenwirken mit den Ein- und Auslassventilen 6, 12, dem Trenn- und Umschaltventil 19, 20 eine automatische Bremsdruckregelung im Hinterradbremskreis 10 gemäß einer im Steuergerät 8 abgelegten elektronischen Bremskraftverteilungskennlinie bewirkt, wenn ausschließlich der am Vorderradbremskreis 4 angeschlossene Hauptbremszylinder 7 betätigt wird.

Analog dazu gilt, dass bei ausschließlicher manueller Betätigung des Hinterradbremskreises 10 der am Hauptbremszylinder 13 des Hinterradbremskreises 4 angeordnete Drucksensor 3 die Führungsgröße zur elektrischen Aktivierung der im Vorderradbremskreis 10 eingesetzten Pumpe 9, des Ein-, Auslassventils 6, 12 sowie des Umschalt- und Trennventils 20, 19 bildet.

Zur Auswertung der Drucksensorsignale ist eine Logikschaltung im elektronischen Steuergerät 8 vorgesehen, in dem abhängig vom Auswerteergebnis der Drucksensorsignale mittels der elektrisch betätigbaren Pumpe 9 ein Hydraulikdruck erzeugt wird.

Das symbolisch dargestellte Steuergerät 8 bildet vorzugsweise ein integrales Bestandteil einer den Vorder- und Hinterradbremskreis 4, 10 aufweisenden Bremseinheit 11, die baulich als monolithischer Block ausgeführt ist. Das Steuergerät 8 ist in einer zweckmäßigen Ausführungsform zur elektrischen Kontaktierung auf die in der Bremseinheit 11 integrierten Ein- und Auslassventile 6, 11, Umschalt- und Trennventile 20, 19 aufgesteckt. Die Bremseinheit 11 lässt sich somit aufgrund der besonders kompakten Bauweise in Nähe einer Batterie an einem Kraftradrahmen befestigen.

Grundsätzlich gilt für eine schlupfgeregelte Bremsung:
1. Eine Blockierneigung des Vorder- bzw. des Hinterrades wird mittels Raddrehzahlsensoren und deren Signalauswertung im Steuergerät 8 sicher erkannt. Das im Vorderrad- bzw. im Hinterradbremskreis 4, 10 angeordnete Einlassventil 6 wird über das Steuergerät 8 elektromagnetisch geschlossen, um einen weiteren Druckaufbau im Vorderrad- bzw. Hinterradbremskreis 4, 10 zu unterbinden.
2. Sollte zur Reduzierung der Blockierneigung zusätzlich ein weiterer Druckabbau im Vorderrad- bzw. Hinterradbremskreis 4, 10 erforderlich sein, so wird dies durch das Öffnen des jeweils mit dem Niederdruckspeicher 16 verbindbaren, normalerweise stromlos geschlossenen Auslassventil 12 erreicht.
   Das Auslassventil 12 wird geschlossen, sobald die Radbeschleunigung wieder über ein bestimmtes Maß hinaus anwächst. In der Druckabbauphase bleibt das entsprechende Einlassventil 6 geschlossen, so dass sich der im Vorderrad- bzw. Hinterradbremskreis 4, 10 erzeugte Hauptbremszylinderdruck nicht auf den Vorderrad- bzw. Hinterradbremskreis 4, 10 fortpflanzen kann.
3. Wenn die ermittelten Schlupfwerte wieder einen Druckaufbau im Vorderrad- bzw. Hinterradbremskreis 4, 10 erlauben, wird das Auslassventil 6 wieder geschlossen und das Einlassventil 6 entsprechend der Anforderung des im Steuergerät 8 integrierten Schlupfreglers zeitlich begrenzt geöffnet. Das für den Druckaufbau erforderliche Hydraulikvolumen wird von der Pumpe 9 zu Verfügung gestellt.
4. Während des schlupffreien als auch schlupfgeregelten Bremsvorgangs verharrt das Trennventil 19 und das Umschaltventil 20, die dem manuell betätigten Hauptbremszylinder nachgeordnet sind, in ihrer abgebildeten Grundstellung, während das Trenn- und Umschaltventil 19, 20, welche dem nicht betätigten Hauptbremszylinder nachgeordnet sind, elektromagnetisch erregt ihre Umkehrstellung einnehmen, wodurch die elektrisch aktivierte Pumpe 9 im elektrohydraulisch angesteuerten Bremskreis Druckmittel über das geöffnete Umschaltventil aus dem nicht betätigten Hauptbremszylinder entnimmt, ohne infolge der elektromagnetisch veranlassten Sperrstellung des zugehörigen Trennventils 19 in den nicht betätigten Hauptbremszylinder zurückfördern zu können.

Unabhängig davon, welcher der beiden Hauptbremszylinder 7, 13 manuell betätigt wird, nimmt in dem Bremskreis, der über den zugehörigen Hauptbremszylinder 7, 13 manuell betätigt ist, zu Beginn des Pumpenlaufs ein Pumpenumlaufventil 23 in Verbindung mit einem Pumpenabsperrventil 24 (oder in Verbindung mit einem Rückschlagventil 25) eine Schaltstellung ein, in der eine Rückwirkung des von der Pumpe 9 erzeugten Drucks auf den hand- oder fußkraftbetätigten Hauptbremszylinder 7, 13 verhindert wird.

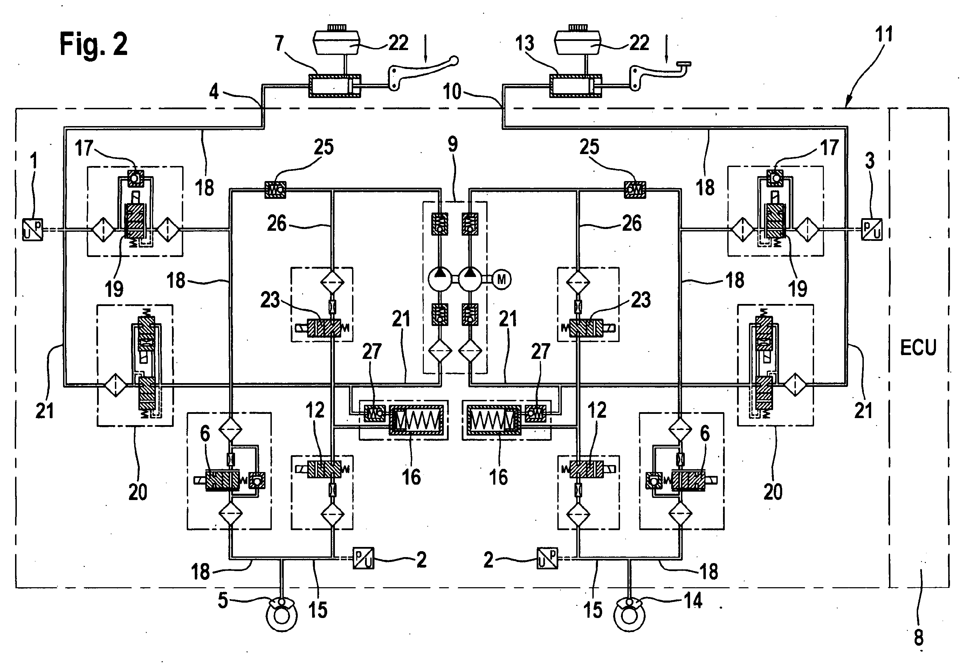

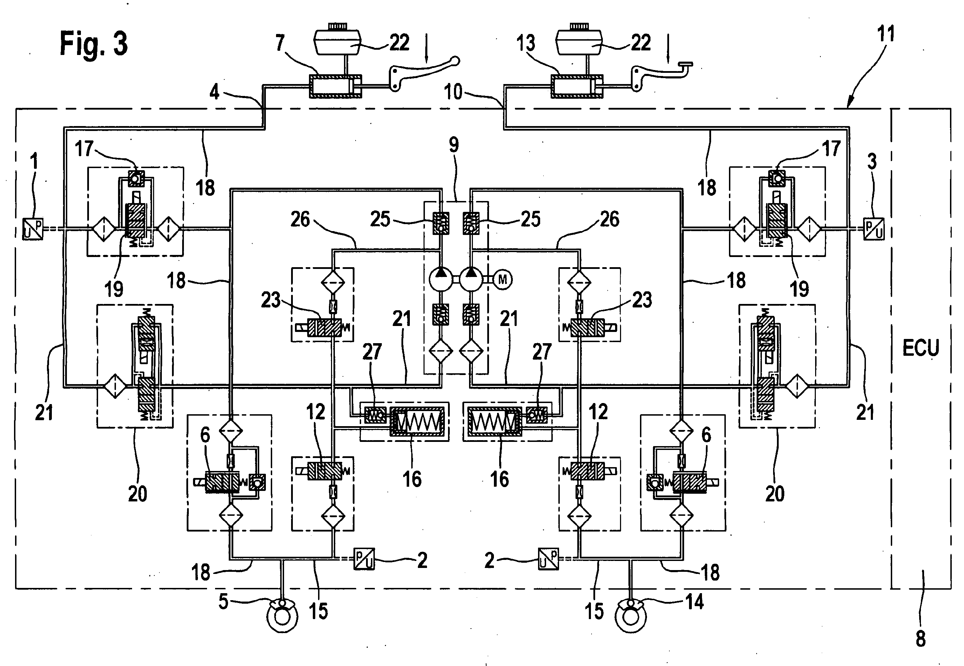

Hierzu nimmt entweder im hand- oder fußkraftbetätigten Bremskreis zu Beginn des Pumpenlaufs entweder gemäß der Figur 1 das Pumpenabsperrventil 24 oder nach Fig. 2, 3 das Rückschlagventil 25 in der Pumpendruckleitung eine geschlossene Schaltstellung bei gleichzeitig geöffnetem Pumpenumlaufventil 23 ein, wodurch eine Rückwirkung des von der Pumpe 9 erzeugten Drucks auf den hand- oder fußkraftbetätigten Hauptbremszylinder 7, 13 auf einfache Weise verhindert ist.

In allen Ausführungsbeispielen sind die in Grundstellung geöffnete Trennventile 19, die in Grundstellung geschlossene Umschaltventile 20, die in Grundstellung geöffnete Einlassventile 6, als auch die in Grundstellung geschlossene Auslassventile 12 als elektrisch betätigbare 2/2-Wegeventile ausgeführt, die auf einfachste Weise jeweils durch eine Feder in ihrer abgebildeten Grundstellung verharren. Ferner ist parallel zu jedem der beiden Trennventile 19 ein in Richtung der Radbremse 5, 14 öffnendes Rückschlagventil 17 angeordnet, wodurch unabhängig von der Trennventilstellung jederzeit über den angeschlossenen Hauptbremszylinder 7, 13 ein Bremsdruckaufbau erfolgen kann.

Ferner gilt für alle Ausführungsbeispiele nach Figur 1-3, dass die Ventilschaltung als wesentliches Element das Pumpenumlaufventil 23 aufweist, das in jedem der beiden Bremskreise in einem Leitungspfad 26 eingesetzt ist, der jeweils eine Bypassverbindung zwischen einer Saug- und Druckseite der Pumpe 9 herstellt. Das Pumpenumlaufventil 23 ist als in Grundstellung geschlossenes 2/2-Wegesitzventil ausgeführt, das während des Pumpenlaufs in demjenigen Bremskreis gerade elektrisch geöffnet ist, dessen Hauptbremszylinder (7 oder 13) entweder von Hand oder durch den Fuß betätigt ist.

In der Figur 1 ist die hydraulische Verbindung der Pumpendruckseite stromabwärts zu jedem Leitungspfad 26 durch ein in Reihe zum Trennventil 19 angeordnetes Pumpenabsperrventil 24 vom angeschlossenen Hauptbremszylinder 7, 13 elektrisch trennbar. Das Pumpenabsperrventil 24 ist als 2/2-Wegeventil ausgeführt und nimmt zur ungehinderten Bremsflüssigkeitsverteilung in seiner Grundstellung federkraftunterstützt seine Offenstellung ein.

Die Funktion des Pumpenabsperrventils 24 kann bei entsprechender Anpassung des Steuergeräts 8 ebenso durch das Trennventil 19 selbst erfüllt werden, sodass eine Hintereinanderschaltung von Trenn- und Pumpenumschaltventil 24 nicht zwingend erforderlich ist.

Der Leitungspfad 26 ist an der Pumpensaugseite stromaufwärts zu einem Druckrückhalteventil 27 am Ausgang des Niederdruckspeichers 16 angeschlossen. Der Niederdruckspeicher 16 wirkt somit vorteilhaft als Puffer für die über das offene Pumpenumlaufventil 23 in den Niederdruckspeicher 16 sich fortpflanzenden Druckimpulse der Pumpe 9.

Die Hydraulikschaltungen nach Figur 2 und 3 unterscheiden sich von Figur 1 durch die Verwendung eines federbelasteten Rückschlagventils 25 anstelle des elektrisch betätigbaren Pumpenabsperrventils 24. Das Rückschlagventil 25 öffnet erst bei einem Druck von etwa 5 bar in Richtung des angeschlossenen Hauptbremszylinders 7, 13, sodass während eines ungeregelten schlupffreien manuellen Bremsbetätigung infolge des gesperrten Umschalt- und Auslassventils 20, 12 der geringe Pumpendruck das Rückschlagventil 25 nicht zu öffnen vermag, womit eine Rückwirkung auf den Hauptbremszylinder 7, 13 sicher vermieden wird.

In der Hydraulikschaltung nach Figur 2 ist das Rückschlagventil 25 als ein von der Pumpe 9 konstruktiv losgelöstes Bauteil stromabwärts zum Pumpendruck- und Pumpenumlaufventil in die Pumpendruckleitung eingefügt, die zur Bremsleitung 18 führt.

Abweichend von der Hydraulikschaltung nach Figur 2 übernimmt das Rückschlagventil 25 in Figur 3 den Platz des Pumpendruckventils innerhalb der Pumpe 9. Der das Pumpenumlaufventil 23 aufweisende Leitungspfad 26 ist daher unmittelbar an den Kompressionsraum der Pumpe 9 angeschlossen.

Soweit nicht auf alle abgebildeten Einzelheiten der Fig. 2, 3 bisher eingegangen wurde, entsprechen diese den zu Figur 1 erläuterten Merkmalen.

### Bezugszeichenliste

- 1: Drucksensor
- 2: Drucksensor
- 3: Drucksensor
- 4: Vorderradbremskreis
- 5: Vorderradbremse
- 6: Einlassventil
- 7: Hauptbremszylinder
- 8: Steuergerät
- 9: Pumpe
- 10: Hinterradbremskreis
- 11: Bremseinheit
- 12: Auslassventil
- 13: Hauptbremszylinder
- 14: Hinterradbremse
- 15: Rücklaufleitung
- 16: Niederdruckspeicher
- 17: Rückschlagventil
- 18: Bremsleitung
- 19: Trennventil
- 20: Umschaltventil
- 21: Pumpensaugpfad
- 22: Ausgleichsbehälter
- 23: Pumpenumlaufventil
- 24: Pumpenabsperrventil
- 25: Rückschlagventil
- 26: Leitungspfad
- 27: Druckrückhalteventil

## Patentansprüche

1. Kraftradbremsanlage mit einem ersten hand- oder fußkraftbetätigten Hauptbremszylinder (7;13) zur hydraulischen Betätigung eines ersten Bremskreises und mit einem zweiten hand- oder fußkraftbetätigten Hauptbremszylinder (7;13) zur hydraulischen Betätigung eines zweiten Bremskreises mit einem zur Bremsschlupfregelung in jeder Radbremse (5,14) eines jeden Bremskreises vorgesehenen Ein- und Auslassventil (6,12), mit einem in jedem der beiden Bremskreise angeordneten Niederdruckspeicher (16), der jeweils stromabwärts des Auslassventils (12) an einer Rücklaufleitung (15) angeschlossen ist, die in jedem Bremskreis zur Saugseite einer Pumpe (9) führt, deren Pumpendruckseite an dem ersten als auch zweiten Bremskreis angeschlossen ist, sowie mit einem Trennventil (19) in jedem Bremskreis, das in der Offenstellung jeweils den zugehörigen Hauptbremszylinder (7,13) mit der Pumpendruckseite und der zugehörigen Radbremse (5,14) verbindet, mit einem Umschaltventil (20) in jedem Bremskreis, das in seiner Offenstellung jeweils den zugehörigen Hauptbremszylinder (7,13) mit der Saugseite der Pumpe (9) verbindet, **dadurch gekennzeichnet,dass** in jedem der beiden Bremskreise zwischen der Pumpe (9) und dem Hauptbremszylinder (7, 13) eine Ventilschaltung vorgesehen ist, die eine Rückwirkung des von der Pumpe (9) erzeugbaren Drucks auf den jeweils hand- oder fußbetätigten Hauptbremszylinder (7 oder 13) verhindert, wobei die Ventilschaltung aus einem Pumpenumlaufventil (23) gebildet ist, das in jedem der beiden Bremskreise in einem Leitungspfad (26) eingesetzt ist, der jeweils eine Bypassverbindung zwischen einer Saug- und Druckseite der Pumpe (9) herstellt, und wobei das Pumpenumlaufventil (23) als in Grundstellung geschlossenes 2/2-Wegesitzventil ausgeführt ist, das in demjenigen Bremskreis elektrisch geöffnet ist, dessen Hauptbremszylinder (7, 13) betätigt ist.

2. Kraftradbremsanlage nach Anspruch 1, **dadurch gekennzeichnet, dass** der Leitungspfad (26) an der Pumpendruckseite zwischen dem Auslass der Pumpe (9) und einem federbelastetem Rückschlagventil (25) angeschlossen ist, welches beim Erreichen eines definierten Öffnungsdrucks in Richtung des Pumpenförderstroms hydraulisch von seinem Ventilsitz abhebbar ist.

3. Kraftradbremsanlage nach Anspruch 1, **dadurch gekennzeichnet, dass** die hydraulische Verbindung der Pumpendruckseite mit dem zugeordneten Hauptbremszylinder (7, 13) stromabwärts zu jedem Leitungspfad (26) entweder durch das Trennventil (19) selbst oder durch ein in Reihe zum Trennventil (19) angeordnetes Pumpenabsperrventil (24) jeweils vom angeschlossenen Hauptbremszylinder (7, 13) trennbar ist.

4. Kraftradbremsanlage nach Anspruch 1, **dadurch gekennzeichnet, dass** an der Saugseite der Pumpe (9), die über das Pumpenumlaufventil (23) jeweils mit der Pumpendruckseite verbindbar ist, ein Umschaltventil (20) angeschlossen ist, das zum Entlüften als auch zum Befüllen der Pumpensaugseite mit Bremsflüssigkeit eine Verbindung zum angeschlossenen Hauptbremszylinder (7, 13) herstellt.

5. Kraftradbremsanlage nach Anspruch 1, **dadurch gekennzeichnet, dass** der Leitungspfad (26) im Bereich der Pumpensaugseite am Niederdruckspeicher (16) angeschlossen ist, an dessen Ausgang stromabwärts zum Leitungspfad (26) ein in Richtung der Pumpensaugseite öffnendes Druckrückhalteventil (27) angeschlossen ist.

6. Kraftradbremsanlage nach Anspruch 2 oder 3, **dadurch gekennzeichnet, dass** beim Anlauf der Pumpe (9) im Bremskreis, dessen Hauptbremszylinder (7, 13) betätigt ist, das Pumpenumlaufventil (23) seine elektrisch geöffnete, hingegen das Pumpenabsperrventil (24) oder das Rückschlagventil (25) seine geschlossene Schaltstellung einnimmt.

## Claims

1. Motorcycle brake system having a first manually activated or foot-activated master brake cylinder (7; 13) for hydraulically activating a first brake circuit and having a second manually activated or foot-activated master brake cylinder (7; 13) for hydraulically activating a second brake circuit, having an inlet valve and outlet valve (6, 12) provided for controlling brake slip in each wheel brake (5, 14) of each brake circuit, having a low pressure accumulator (16) which is arranged in each of the two brake circuits and which is respectively connected downstream of the outlet valve (12) on a return line (15) which leads, in each brake circuit, to the suction side of a pump (9) whose pump pressure side is connected to the first and second brake circuits, and having an isolating valve (19) in each brake circuit which in the open position respectively connects the associated master brake cylinder (7, 13) to the pump pressure side and to the associated wheel brake (5, 14), and having a switchover valve (20) in each brake circuit which in its open position respectively connects the associated master brake cylinder (7, 13) to the suction side of the pump (9), **characterized in that** in each of the two brake circuits a valve circuit (23, 24; 23, 25) is provided between the pump (9) and the master brake cylinder (7, 13), which valve circuit prevents the pressure which can be generated by the pump (9) from reacting on the respectively manually activated or foot-activated master brake cylinder (7 or 13), the valve circuit being formed from a pump circulation valve (23) which, in each of the two brake circuits, is inserted into a line path (26) which respectively produces a bypass connection between a suction side and a pressure side of the pump (9), and the pump circulation valve (23) being embodied as a 2/2 way seat valve which is closed in the home position and which is opened electrically **in that** brake circuit whose master brake cylinder (7, 13) is activated.

2. Motorcycle brake system according to Claim 1, **characterized in that** the line path (26) is connected to the pump pressure side between the outlet of the pump (9) and a spring-loaded nonreturn valve (25) which, when a defined opening pressure is reached in the direction of the pump delivery flow, can be lifted off hydraulically from its valve seat.

3. Motorcycle brake system according to Claim 1, **characterized in that** the hydraulic connection of the pump pressure side to the assigned master brake cylinder (7, 13) can be respectively disconnected from the connected master brake cylinder (7, 13) downstream of each line path (26) either by means of the isolating valve (19) itself or by means of a pump check valve (24) which is arranged in series with the isolating valve (19).

4. Motorcycle brake system according to Claim 1, **characterized in that** a switchover valve (20), which, for the purpose of venting and filling the pump suction side with brake fluid, produces a connection to the connected master brake cylinder (7, 13), is connected to the suction side of the pump (9), which can be respectively connected to the pump pressure side via the pump circulation valve (23).

5. Motorcycle brake system according to Claim 1, **characterized in that** the line path (26) is connected to the low pressure accumulator (16) in the region of the pump suction side, at the output of which low pressure accumulator (16), downstream of the line path (26), a pressure retaining valve (27) which opens in the direction of the pump suction side is connected.

6. Motorcycle brake system according to Claim 2 or 3, **characterized in that**, when the pump (9) in the brake circuit whose master brake cylinder (7, 13) is activated starts up, the pump circulation valve (23) assumes its electrically opened switched position, while the pump check valve (24) or the nonreturn valve (25) assumes its closed switched position.

## Revendications

1. Système de frein de motocyclette, comprenant un premier cylindre de frein principal (7 ; 13) actionné par la force d'une main ou d'un pied pour la commande hydraulique d'un premier circuit de freinage et un deuxième cylindre de frein principal (7 ; 13) actionné par la force d'une main ou d'un pied pour la commande hydraulique d'un deuxième circuit de freinage, une soupape d'admission et d'échappement (6, 12) prévue pour la régulation du glissement des freins dans chacun des freins de roue (5, 14) de chaque circuit de freinage, un accumulateur de basse pression (16) disposé dans chacun des deux circuits de freinage, qui est raccordé à chaque fois en aval de la soupape d'échappement (12) à une conduite de retour (15), qui conduit dans chaque circuit de freinage au côté aspiration d'une pompe (9), dont le côté pression est raccordé au premier et au deuxième circuit de freinage, ainsi qu'une soupape de coupure (19) dans chaque circuit de freinage, qui relie dans la position ouverte à chaque fois le cylindre de frein principal associé (7, 13) au côté pression de la pompe et au frein de roue associé (5, 14), une soupape d'inversion (20) dans chaque circuit de freinage, qui relie dans sa position ouverte à chaque fois le cylindre de frein principal associé (7, 13) au côté aspiration de la pompe (9), **caractérisé en ce que** l'on prévoit dans chacun des deux circuits de freinage entre la pompe (9) et le cylindre de frein principal (7, 13) un branchement de soupape qui empêche une réaction de la pression pouvant être produite par la pompe (9) sur le cylindre de frein principal respectif actionné par la main ou le pied (7 ou 13), le branchement de soupape étant formé d'une soupape de dérivation de pompe (23) qui est insérée dans chacun des deux circuits de freinage dans un passage de conduite (26) qui crée une connexion de dérivation entre un côté aspiration et un côté pression de la pompe (9), et la soupape de dérivation de pompe (23) étant réalisée sous forme de soupape à siège à 2/2 voies fermée dans la position de base, qui est ouverte électriquement dans le circuit de freinage dont le cylindre de frein principal (7, 13) est actionné.

2. Système de frein de motocyclette selon la revendication 1, **caractérisé en ce que** le passage de conduite (26) est raccordé du côté pression de la pompe entre la sortie de la pompe (9) et une soupape de non retour sollicitée par ressort (25), qui, à l'obtention d'une pression d'ouverture définie dans la direction du courant de refoulement de la pompe, peut être soulevée hydrauliquement de son siège de soupape.

3. Système de frein de motocyclette selon la revendication 1, **caractérisé en ce que** la connexion hydraulique du côté pression de la pompe au cylindre de frein principal associé (7, 13), peut être séparée à chaque fois du cylindre de frein principal raccordé (7, 13), en aval de chaque passage de conduite (26), soit par la soupape de coupure (19) elle-même, soit par une soupape d'arrêt de pompe (24) disposé en série par rapport à la soupape de coupure (19).

4. Système de frein de motocyclette selon la revendication 1, **caractérisé en ce que** du côté aspiration de la pompe (9), qui peut être connecté par le biais de la soupape de dérivation de pompe (23) à chaque fois au côté pression de la pompe, est raccordée une soupape d'inversion (20) qui crée une connexion au cylindre de frein principal raccordé (7, 13) à la fois pour le désaérage et pour le remplissage du côté aspiration de la pompe en liquide de frein.

5. Système de frein de motocyclette selon la revendication 1, **caractérisé en ce que** le passage de conduite (26) est raccordé, dans la région du côté aspiration de la pompe, à l'accumulateur basse pression (16), à la sortie duquel, en aval du passage de conduite (26), est raccordée une soupape de retenue de pression (27) s'ouvrant dans la direction du côté aspiration de la pompe.

6. Système de frein de motocyclette selon la revendication 2 ou 3, **caractérisé en ce que** lors du lancement de la pompe (9) dans le circuit de freinage, dont le cylindre de frein principal (7, 13) est actionné, la soupape de dérivation de pompe (23) adopte sa position de commutation ouverte électriquement, et au contraire la soupape d'arrêt de pompe (24) ou la soupape de non-retour (25) adopte sa position de commutation fermée.
